# FASCICULE DE BREVET EUROPEEN

(11) **EP 0 876 748 B1**
(45) Date de publication et mention de la délivrance du brevet: **30.06.2004**
(21) Numéro de dépôt: 98440082.0
(22) Date de dépôt: 05.05.1998
(51) Int. Cl.: A01D 34/66, A01D 34/28

(54) **Appareil ou machine comportant une unité de travail articulée par rapport à une structure porteuse et procédé d'articulation**
Maschine mit einer relativ zu der Tragkonstruktion schwenkbaren Bearbeitungseinheit und Schwenk-Verfahren
Machine with a working unit pivotably mounted on a supporting structure and pivoting method

(30) Priorité: 06.05.1997 FR 9705752
(43) Date de publication de la demande: 11.11.1998
(73) Titulaire: KUHN S.A., 67700 Saverne (FR)
(72) Inventeur: Wolff, Michel, 67670 Waltenheim sur Zorn (FR)

(56) Documents cités:
- EP-A- 0 339 231
- EP-A- 0 525 402
- EP-A- 0 642 731
- EP-A- 0 740 898
- DE-A- 4 007 735
- DE-C- 4 415 205
- FR-A- 2 255 839
- FR-A- 2 614 755

## Description

La présente invention se rapporte au domaine technique des appareils ou machines agricoles et en particulier à des appareils du type faucheuse, faucheuse-conditionneuse ou à des machines pour le traitement de végétaux du type faneur ou andaineur.

L'invention concerne un appareil ou une machine agricole comportant une unité de travail articulée sur un châssis ou sur une structure porteuse, ladite unité étant articulée à l'aide de moyens spécifiques dont la conception optimise le fonctionnement de l'appareil. Une telle optimisation est souhaitable par exemple lorsque l'unité de travail se déplace sur le sol, lequel peut présenter des dénivelés progressifs plus ou moins étendus. Le sol définit ainsi une surface de travail soit plane, soit irrégulière par endroits, à laquelle l'appareil ou la machine doit se conformer si l'on désire obtenir une qualité de travail homogène.

La position de l'unité de travail par rapport au châssis doit en conséquence être modifiable de manière à tenir compte de diverses configurations du sol.

Il est déjà connu de réaliser un appareil ou machine susceptible d'être déplacé(e) sur une surface de travail et comportant :
- une structure porteuse ou châssis,
- une unité de travail articulée par rapport à ladite structure porteuse ou châssis, à l'aide d'un dispositif d'accrochage, lequel comprend au moins une liaison par parallélogramme transformable automatiquement en liaison par quadrilatère quelconque.

Il est également connu d'utiliser un procédé d'articulation d'une unité de travail par rapport à une structure porteuse ou châssis, notamment pour une machine agricole, consistant à :
- disposer l'unité de travail dans une position normale de travail ;
- déplacer l'unité de travail sur une surface de travail ; et
- adapter le positionnement de l'unité de travail en fonction de dénivellations rencontrées sur la surface de travail.

On connaît en effet, par l'intermédiaire du document **FR-A-2 458 981** une machine agricole dans laquelle on utilise une liaison par parallélogramme pour déplacer une unité de travail par rapport à un châssis. De tels déplacements permettent à l'unité de travail, par exemple un mécanisme de coupe, de s'abaisser ou de remonter à partir d'une position normale de travail. L'unité de travail peut ainsi s'adapter aux irrégularités du sol sur lequel elle se déplace. La machine décrite dans ce document présente cependant l'inconvénient de ne pas prendre en considération des configurations différentes des dénivellations. Ceci peut donner lieu à des adaptations au sol non optimales de l'unité de travail et par conséquent à des dysfonctionnements ou détériorations de la machine.

Par ailleurs, le document **EP-A-0 339 231** décrit notamment une faucheuse pourvue d'un mécanisme de coupe dont les couteaux de fauche définissent un plan de travail.

Ce mécanisme de coupe est soutenu sur un cadre support ou châssis, par l'intermédiaire d'un dispositif d'accrochage, pour que ledit plan de travail soit inclinable autour d'un axe transversal à la direction de déplacement de la faucheuse. Le dispositif d'équilibrage tel que décrit, présente une structure particulière pour faire passer l'axe transversal à la direction de déplacement par un centre instantané de rotation situé sous le plan de travail. Un tel dispositif d'accrochage permet de faire pivoter, vers le haut ou vers le bas, l'avant du plan de travail pour s'adapter à des irrégularités du sol correspondant respectivement à des dénivellations du type obstacles ou trous plus ou moins étendus.

Un tel dispositif peut néanmoins présenter des inconvénients majeurs. En effet, ce dispositif d'accrochage ne permet pas toujours d'aborder de façon optimale tous les types de dénivelés. Ainsi, lorsque la machine et par conséquent une unité de travail du type mécanisme de coupe s'engage progressivement dans un trou selon une direction descendante, le plan de travail s'incline dans la même direction descendante. Le mécanisme de coupe présente alors une orientation angulaire souvent peu adaptée pour attaquer la pente montante plus ou moins abrupte de l'autre extrémité du trou. Il a malencontreusement tendance à attaquer directement le sol en s'y encastrant. Une dégradation de ses couteaux ainsi que des contraintes mécaniques néfastes sur l'ensemble de la machine sont alors des conséquences évidentes et inévitables dans ces conditions. Un autre inconvénient d'un tel dispositif est lié à un certain manque de stabilité lors de déplacements sur des sols irréguliers. Ce phénomène se trouve d'ailleurs souvent accentué avec des vitesses d'avancement élevées, pouvant entraîner une usure prématurée des différentes articulations supportant le mécanisme de coupe.

On connaît également le document DE-40 07 735, lequel décrit une faucheuse comportant une structure porteuse, une unité de coupe articulée par rapport à ladite structure porteuse à l'aide d'un dispositif d'accrochage. Ce dernier comprend un système de bielles articulées autorisant l'unité de coupe à pivoter vers le haut et vers le bas de manière à suivre les dénivellations de la surface de travail. Chaque dénivellation rencontrée par l'unité de coupe provoque son pivotement vers le haut ou vers le bas de manière à épouser au mieux la forme de ladite dénivellation. Une telle adaptation au sol ne permet pas d'écarter les inconvénients mentionnés précédemment.

L'objet de la présente invention vise à remédier aux inconvénients de l'état de la technique.

L'objet de la présente invention vise donc à réaliser un appareil ou machine dont l'unité de travail comportant par exemple des outils de fauche, de fanage ou de travail du sol, prend des positions angulaires optimales par rapport aux dénivellations rencontrées lors du déplacement de l'appareil ou machine sur le sol.

L'objet assigné à la présente invention est atteint à l'aide d'un procédé selon la revendication 1.

L'objet de la présente invention est également atteint à l'aide d'un appareil ou d'une machine selon la revendication 5.

Avantageusement, le dispositif d'accrochage comporte au moins un système de bielles pour assurer la liaison entre une structure porteuse ou châssis et l'unité de travail.

La machine ou l'appareil conforme à l'invention peut également comporter un système de positionnement, du type vérin hydraulique, pour déplacer une unité de travail entre une position basse de travail et une position haute de transport et inversement.

La machine ou l'appareil conforme à l'invention peut aussi comporter un mécanisme de blocage pour déposer ladite machine ou appareil après son utilisation, dans une position facilitant un futur attelage ou accrochage à un tracteur, et correspondant à une orientation angulaire et/ou une remontée particulière de l'unité de travail.

Un avantage lié à la présente invention est obtenu par une réduction des chocs, néfastes pour la faucheuse, et générés par des accrochages entre l'extrémité de travail et le sol.

D'autres caractéristiques et avantages de l'invention apparaîtront à la lecture de la description détaillée d'exemples de réalisation non limitatifs, laquelle description se réfère notamment aux dessins annexés dans lesquels :
- **la figure 1** représente une vue de côté d'un exemple de réalisation d'un appareil ou machine conforme à l'invention, dont l'unité de travail se trouve dans une position de travail normale
- la **figure 2** représente une vue de côté de l'appareil ou de la machine de la figure 1, dont l'unité de travail se trouve dans une position basse extrême de travail ;
- **la figure 3** représente une vue de côté de l'appareil ou de la machine de la figure 1, dont l'unité de travail se trouve dans une position de travail correspondant à une amplitude de remontée déterminée ;
- la **figure 4** représente une vue de côté de l'appareil ou de la machine de la figure 1, dont l'unité de travail se trouve dans une position haute de travail ;
- les **figures 5, 6 et 7** représentent chacune une vue de côté partielle d'un autre exemple de réalisation de la machine ou de l'appareil conforme à l'invention.

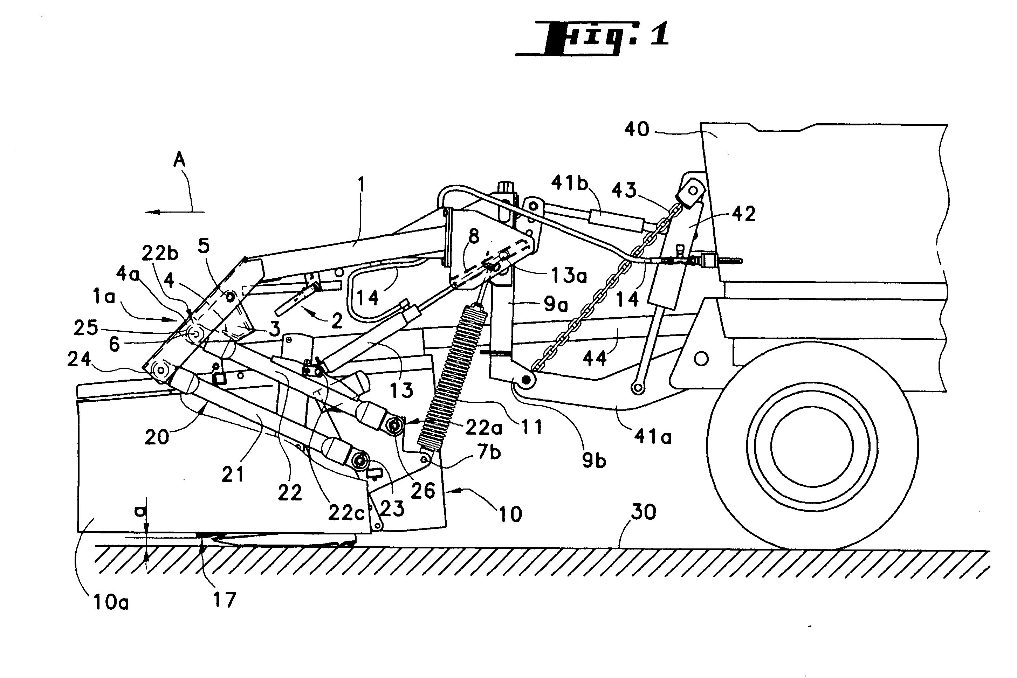

L'appareil représenté aux figures 1 à 7 est une faucheuse à disques susceptible d'être attelée à l'avant d'un tracteur. D'autres possibilités d'attelage ou de traction peuvent également s'envisager sans sortir du cadre de la présente invention. L'invention ne se limite nullement à ce seul exemple de réalisation. Le dispositif d'accrochage conforme à l'invention peut s'adapter à tout type d'appareil ou de machine agricole ou de travaux publics dont l'unité de travail se déplace sur et/ou au voisinage du sol ou d'une paroi.

La figure 1 représente une vue de côté d'un premier exemple de réalisation d'un appareil conforme à l'invention en position de travail normale. L'appareil comprend un châssis (1) réalisé en plusieurs pièces solidaires les unes des autres. Un triangle femelle (9a) du châssis (1) est destiné à l'attelage à un tracteur (40) par un système de relevage à trois points. Ce dernier comprend ainsi deux bras d'attelage inférieurs (41a) et un bras d'attelage supérieur (41b) solidarisés avec un triangle mâle (9b) complémentaire du triangle (9a). Le système de relevage à trois points est avantageusement actionné par un vérin de relevage (42). Le système de relevage représenté aux figures 1 à 4 est également associé à une chaîne de positionnement (43) limitant, vers le bas, la course des bras d'attelage inférieurs (41a) en vue du positionnement correct du châssis (1) par rapport au sol (30) en position de travail normale. La machine fonctionne grâce à un arbre de transmission (44) connecté au tracteur (40). La machine conforme à l'invention présente de préférence un dispositif de protection (10a) partiellement découpé pour améliorer la visualisation des pièces constitutives de la machine.

L'appareil conforme à l'invention comprend également une unité de travail (10) correspondant par exemple à un mécanisme de coupe pourvu de disques (17). L'unité de travail (10) est reliée au châssis (1) par l'intermédiaire d'un dispositif d'accrochage (20). Ce dernier est pourvu de moyens mécaniques assurant un mouvement de flottement de l'unité de travail (10) par rapport au châssis (1) et par conséquent un mouvement de remontée ou d'abaissement complémentaire de l'unité (10) en partant d'une position normale de travail. Les moyens mécaniques comprennent ainsi un système de positionnement du type vérin hydraulique (13), pour déplacer l'unité de travail (10) entre une position de travail et une position haute de transport et inversement. Le vérin hydraulique (13) est alimenté par une conduite (14) reliée au tracteur (40). Le système de positionnement est articulé sur l'unité de travail (10) et présente un point d'ancrage (13a) sur le châssis (1), coulissant dans une fente de débattement (8). Cette dernière est ménagée dans le châssis (1) de manière à autoriser le mouvement de flottement de l'unité de travail (10) lorsque ladite unité est en position de travail. Le point d'ancrage (13a) peut être obtenu par tout moyen et notamment par une vis ou une tige ou un goujon traversant la fente de débattement (8). Le mouvement de flottement de l'unité de travail (10) n'est donc possible qu'à partir d'une élongation au moins partielle du vérin hydraulique (13). Une contraction complète du vérin hydraulique (13) correspond à une position haute pour l'unité de travail (10), se rapportant à une position de transport.

Le dispositif d'accrochage (20) comporte de préférence un système de bielles (21, 22) pour assurer la liaison entre le châssis (1) et l'unité de travail (10).

Le système de bielles (21, 22) est avantageusement associé à une pièce support (3) rapportée sur le châssis (1). L'une (22) des bielles (21 ; 22) est articulée au moyen d'une articulation (26), sur l'unité de travail (10) avec sa première extrémité (22a), sa seconde extrémité (22b) étant articulée sur la pièce support (3) au moyen d'une articulation (25) d'axe (6). Ladite pièce support (3), quant à elle, est en rotation sur le châssis (1) et selon un axe (5) décalé par rapport à l'axe d'articulation (6) de la bielle (22) pour réaliser une bielle supplémentaire.

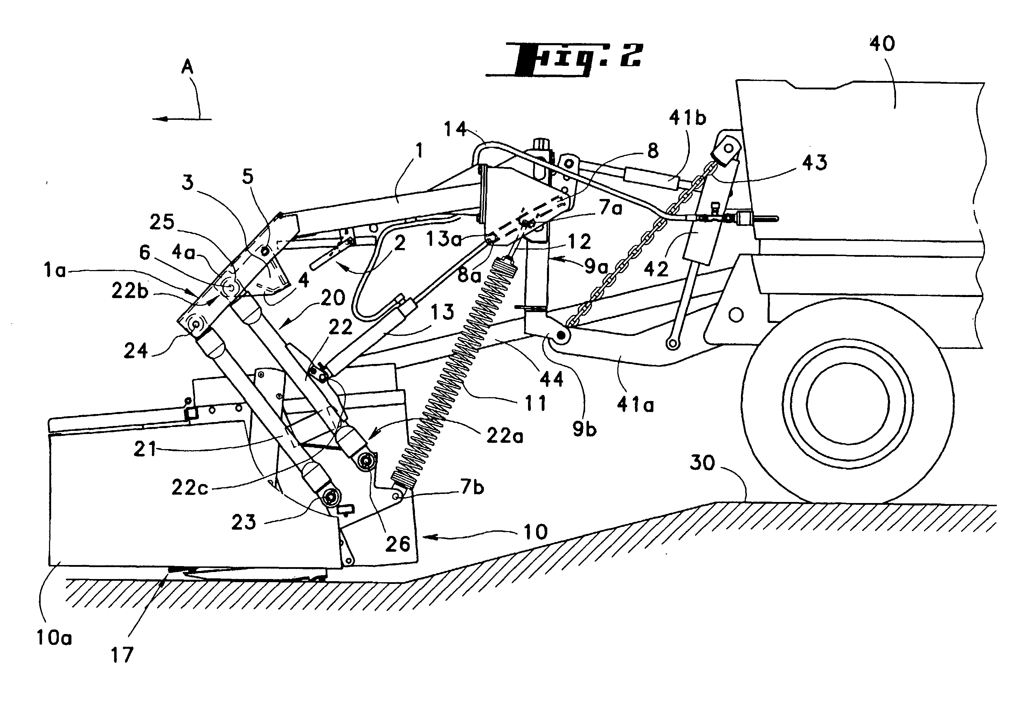

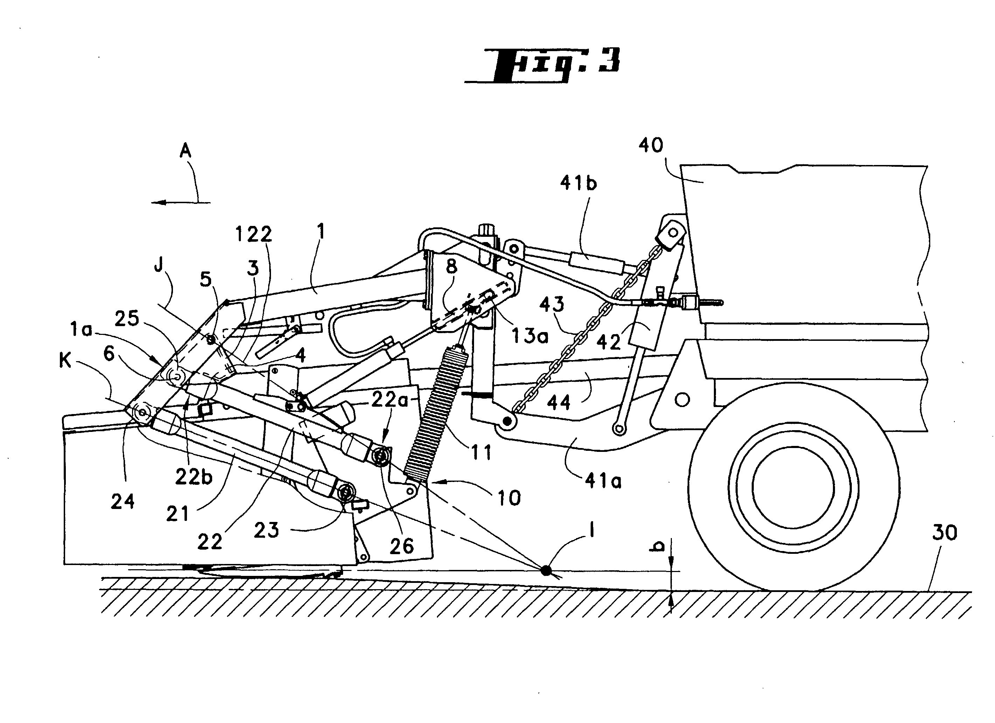

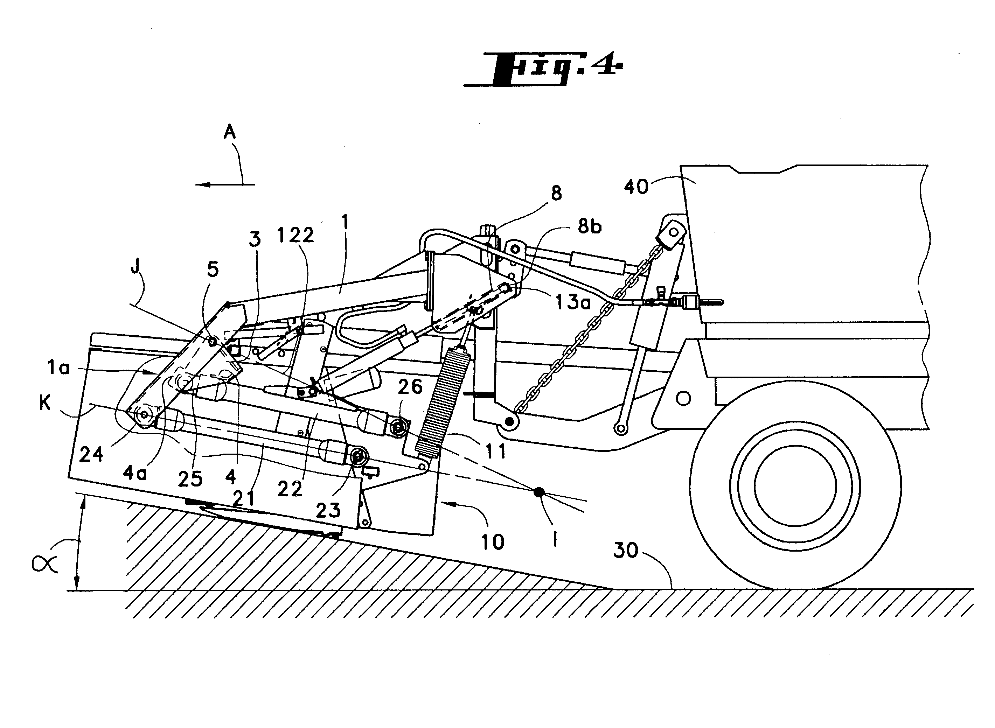

La pièce support (3) est également pourvue d'une butée (4) contre laquelle la bielle (22) est susceptible de venir en appui, de sorte que ladite bielle (22) et ladite pièce support (3) tournent alors conjointement autour de l'axe (5) en formant une bielle fictive (122) articulée en (26) à l'unité de travail (10) et en (5) au châssis (1) (cf. figures 3 et 4).

Selon l'exemple de réalisation représenté aux figures 1 à 4 le système de bielles (21, 22) comprend une bielle inférieure (21) reliant directement l'unité de travail (10) au châssis (1) et une bielle supérieure (22) reliant l'unité de travail (10) à la pièce support (3).

Le dispositif d'accrochage (20) réalise avantageusement une liaison par parallélogramme transformable en liaison par quadrilatère quelconque pour obtenir un pivotement ou une inclinaison de l'unité de travail (10). Le dispositif d'accrochage (20) comporte à ce titre des moyens pour transformer la liaison par parallélogramme en liaison par quadrilatère quelconque, à partir d'une amplitude de remontée complémentaire déterminée (cf. figure 3). Cette inclinaison dirigée vers le haut permet par exemple d'augmenter la distance entre le front d'attaque de l'unité de travail (10) ou de modifier l'orientation angulaire vis-à-vis du sol (30), et par conséquent de passer plus facilement sur des obstacles. L'inclinaison n'a lieu qu'à partir d'une amplitude donnée de remontée de l'unité de travail (10). En deçà de cette amplitude limite, le dispositif d'accrochage (20) réalise une liaison par parallélogramme n'autorisant qu'un déplacement ou mouvement de flottement à savoir un abaissement ou une remontée sans incidence sur l'orientation angulaire de l'unité de travail (10) vis-à-vis du châssis (1). La transformation de la liaison par parallélogramme en liaison par quadrilatère quelconque est automatique et ne nécessite aucun réglage ou aucune manipulation particulière au cours du fonctionnement de la machine conforme à l'invention. Cette transformation est commandée selon le cas, uniquement par la nature des obstacles rencontrés par l'unité de travail (10). Aucune intervention de l'utilisateur de la machine n'est nécessaire en cours de fonctionnement pour transformer le dispositif d'accrochage (20).

Ainsi, la butée (4) prend appui sur la bielle (22) à partir d'une amplitude de remontée donnée de l'unité de travail (10). Une remontée de l'unité (10), dépassant cette amplitude donnée ou amplitude limite, engendre alors la transformation de la liaison par parallélogramme en liaison par quadrilatère quelconque. Cette transformation est obtenue en rendant opérationnelle la bielle fictive (122) à la place de la bielle (22).

Les bielles (21, 22) sont de même longueur et s'étendent de préférence selon des directions montantes dans le sens d'avancement (A) de l'appareil ou de la machine. Avec une telle configuration du dispositif d'accrochage (20), et en particulier des bielles (21, 22), l'unité de travail (10) est donc tractée au travail.

Le vérin hydraulique (13) est de préférence accroché à la bielle supérieure (22) à l'aide d'un moyen de liaison (22c). Avantageusement, la machine ou l'appareil conforme à l'invention peut comporter un vérin hydraulique (13) sur chaque côté latéral.

Selon un autre exemple de réalisation de la machine conforme à l'invention, le vérin hydraulique ( 13) peut également être fixé directement sur l'unité de travail (10).

Sur les figures 3 et 4, on a représenté la manière selon laquelle la bielle fictive (122) devient opérationnelle à la place de la bielle supérieure (22). La génératrice passant par les centres des articulations (23 et 24) et la génératrice passant par l'axe (5) et l'articulation (26) se croisent en un point d'intersection définissant un centre instantané de rotation (I). Le dispositif d'accrochage (20) permet ainsi de définir un centre instantané de rotation (I) pour l'unité de travail (10) et ce à partir d'une amplitude de remontée déterminée.

La construction et les dimensions des différents moyens mécaniques sont choisies avantageusement pour déterminer une amplitude de remontée optimale avant d'obtenir une modification de l'orientation angulaire de l'unité de travail (10) par rapport au châssis (1), et l'apparition du centre instantané de rotation (I).

L'orientation angulaire de l'unité de travail (10) par rapport au châssis (1), reste donc constante sur une plage ou une course de mouvement donnée, correspondant le cas échéant à un abaissement ou à une remontée par rapport à une position normale de travail. Ce n'est qu'à partir d'un seuil de remontée que l'unité de travail (10) commence à pivoter ou basculer.

Selon un exemple complémentaire de réalisation de l'appareil ou de la machine conforme à l'invention, la pièce support (3) est pourvue d'une butée (4) réglable ou orientable de manière à modifier l'amplitude limite de remontée avant l'apparition du centre instantané de rotation (I). Des vis de réglage adéquates ou d'autres moyens peuvent être prévus à cet effet.

Les articulations des bielles (21, 22) sont obtenues de préférence avec des articulations (23, 24, 25 et 26) du type sphérique.

Selon un autre exemple complémentaire de réalisation de l'appareil ou de la machine conforme à l'invention, l'une des bielles (21, 22) est réalisée avec une pièce de longueur variable du type vérin hydraulique. Ainsi, à titre d'exemple non représenté aux figures, la bielle supérieure (22) peut être remplacée par un vérin hydraulique dont l'extension entraîne un pivotement de l'unité de travail (10), autour d'un axe réel passant par le centre de l'articulation (23). La commande de l'extension ou de la contraction du vérin peut être réalisée avec tous moyens et notamment avec des capteurs de grandeurs physiques. Ces derniers permettent par exemple de détecter des obstacles sur la surface de travail (sol (30)) par l'intermédiaire d'un léger mouvement de rotation de l'une des bielles (21, 22) et/ou d'une amplitude de remontée particulière de l'unité de travail (10).

L'extension du vérin permet d'appliquer à l'unité (10), un couple de forces engendrant une légère rotation adéquate autour de l'axe réel passant par le centre d'articulation (23).

Les moyens mécaniques comportent également et avantageusement un moyen élastiquement déformable fixé respectivement à des points d'ancrage (7a) et (7b) du châssis (1) et de l'unité de travail (10), pour réduire les forces de réaction lorsque ladite unité (10) repose sur le sol (30).

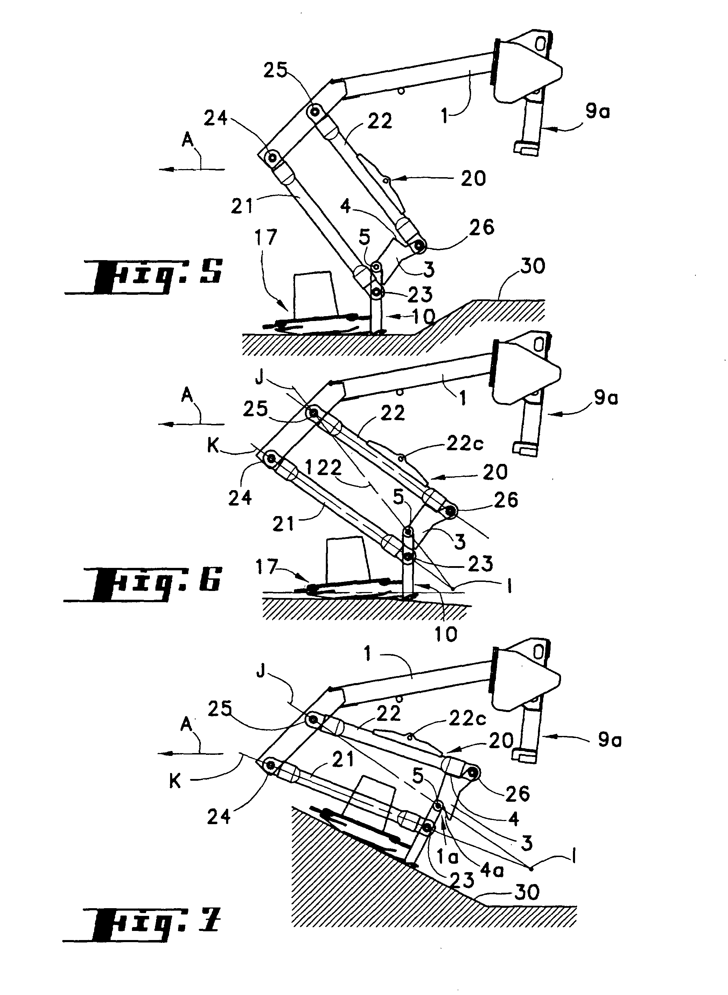

Le point d'ancrage (7b) est localisé sur l'unité de travail (10) de façon à ce que le moyen élastiquement déformable exerce un couple de forces sur ladite unité (10), tendant à retransformer la liaison par quadrilatère quelconque en liaison par parallélogramme (dans l'exemple représenté, le moyen élastiquement déformable crée une compression dans la bielle supérieure (22)). La pièce support (3) présente par conséquent une forme particulière pour réaliser une butée supplémentaire (4a) venant en appui sur une zone (1a) du châssis (1), ou sur l'unité de travail (10), tel que cela est représenté respectivement aux figures 1 à 4 et aux figures 5 à 7. Une telle solution s'avère particulièrement avantageuse lorsque l'unité de travail (10) se déplace sur un sol irrégulier. Ce dernier aura tendance à faire décoller l'unité (10), en particulier pour des vitesses d'avancement importantes. En effet, les efforts exercés sur l'unité de travail (10) sont dirigés dans diverses directions et notamment dans des directions favorisant une remontée de ladite unité (10).

La machine conforme à l'invention procure ainsi une stabilité accrue de l'unité de travail (10) par rapport au sol.

Le moyen élastiquement déformable est par exemple un ressort de flottement (11). La tension du ressort de flottement (11) peut accessoirement être modifiée par une vis de réglage (12) reliant par tous moyens connus ledit ressort (11) au châssis (1). Avantageusement, le point d'ancrage (7b) est disposé sur une partie de l'unité de travail (10), de manière à ce que la force de rappel du ressort de flottement (11) s'oppose au basculement ou au pivotement de l'unité (10) donc au pivotement de la pièce support (3) autour de l'axe (5). Une telle conception permet d'une part de stabiliser le dispositif d'accrochage (20), notamment lors de vitesses d'avancement rapides de la machine, et d'autre part de ramener l'unité de travail (10) dans son orientation angulaire initiale lors d'un abaissement consécutif à une remontée complémentaire de ladite unité (10).

Une machine ou appareil conforme à l'invention comporte de préférence un dispositif d'accrochage (20) avec un système de bielles (21, 22) sur ses côtés latéraux. Il est également possible, sans sortir du cadre de la présente invention, de réaliser un appareil ayant une bielle (21) sur ses côtés latéraux et une seule bielle (22) implantée sur un côté latéral ou alors agencée de façon sensiblement centrale dans ou sur l'appareil.

Le dispositif d'accrochage (20), conforme à l'invention, est représenté aux figures 1 à 4 dans diverses configurations et diverses positions de l'unité de travail ( 10) d'une machine agricole, en l'occurrence une faucheuse. L'appareil représenté aux figures est destiné à être attelé à un tracteur ou accroché à un système de relevage d'un tracteur.

La figure 1 représente l'unité de travail (10) dans une position de travail normale.

La figure 2 représente l'unité de travail (10) dans une position basse extrême de travail, laquelle est obtenue par un éloignement de ladite unité (10) du châssis (1) à l'aide de la liaison par parallélogramme. Cette position extrême est délimitée par l'extension maximale du vérin hydraulique (13) et par la position de l'ancrage (13a) du vérin hydraulique (13) lequel ancrage (13a) est en butée sur l'extrémité inférieure (8a) de la fente de débattement (8). Les bielles (21, 22) restent parallèles entre elles, n'entraînant pas, de ce fait, le pivotement de l'unité de travail (10).

La figure 3 représente une position de travail plus haute que celle de la figure 1. Le débattement du vérin hydraulique (13), soutenu par l'action du ressort de flottement (11), permet ainsi d'amener la bielle supérieure (22) contre la butée (4). Ceci correspond à l'amplitude de remontée maximale ou limite de l'unité de travail (10), n'altérant pas la configuration en parallélogramme du système de bielles (21, 22).

A partir de cette amplitude déterminée, il est possible de représenter le centre instantané de rotation (I) de l'unité de travail (10) localisé à l'intersection des segments fictifs (IK) et (IJ) apparaissant aux figures 3, 4 et 7.

Le segment (IK) est défini par une droite fictive passant par le centre des articulations (23 et 24), alors que le segment (IJ) est défini par une droite fictive passant par le centre de l'articulation (26) et l'axe (5) constituant l'axe de rotation de la pièce support (3).

Une remontée supplémentaire à celle déjà parcourue dans la figure 3 de l'unité de travail (10) entraîne alors une transformation du parallélogramme en quadrilatère quelconque ou en trapèze selon un choix de construction non représentée.

La figure 4 montre l'unité de travail (10) dans une position haute correspondant à une position de travail ultime qui est atteinte lorsque l'ancrage (13a) du vérin hydraulique (13) est en butée sur l'extrémité supérieure (8b) de la fente de débattement (8).

Dans une telle position haute, l'unité de travail (10) présente une inclinaison vers le haut dans la direction d'avancement (A) de la machine ou de l'appareil. Une telle orientation angulaire du front d'attaque du mécanisme de coupe et par conséquent des disques (17) permet d'attaquer de façon optimale des obstacles ou dénivellations.

On peut aisément obtenir une orientation d'un angle (a) référencé à la figure 4 par exemple de l'ordre de 2° à 20° du mécanisme de coupe par rapport à une direction horizontale. Toute autre orientation angulaire peut convenir, en fonction de besoins ou de contraintes spécifiques.

Selon un autre exemple de réalisation de la machine conforme à l'invention et représentée aux figures 5, 6 et 7, la pièce support (3) est montée en rotation sur l'articulation (26) de la bielle (22). La butée supplémentaire (4a) est susceptible de venir en appui sur l'unité de travail (10) lorsque le dispositif d'accrochage (20) présente une configuration en parallélogramme. Une telle situation est montrée par exemple à la figure 5, où l'unité de travail (10) a subi un abaissement complémentaire par rapport à une position de travail normale. Après une remontée d'une amplitude déterminée de l'unité de travail (10) schématisée à la figure 6, la butée (4) vient en appui contre la bielle supérieure (22). La bielle (22) et la pièce support (3) se transforment alors en la bielle fictive (122) articulée en (25) au châssis (1) et en (5) à l'unité de travail (10) et le centre instantané de rotation (I) apparaît. Ce dernier est localisé à l'intersection des génératrices fictives IJ et IK des figures 6 et 7. La figure 7 montre ainsi le passage de l'unité de travail (10) sur un dénivelé ou obstacle du sol (30).

Il est également possible d'agencer la pièce support (3) avec des modifications de formes adéquates, sur les articulations (23 ou 24) sans sortir du cadre de la présente invention.

L'une des extrémités du châssis (1) comprend le triangle femelle (9a) pour accrocher l'appareil ou la machine à un tracteur (40). Il est donc important de conserver une inclinaison minimale du plan d'extension de ce triangle (9a) par rapport à une direction verticale. En outre, l'appareil repose en général sur l'unité de travail (10) dont l'orientation angulaire détermine l'inclinaison du plan d'extension du triangle (9a).

L'appareil ou la machine conforme à l'invention peut comprendre avantageusement un mécanisme de blocage (2) pour déposer ladite machine, après son utilisation, dans une position facilitant un futur attelage ou accrochage à un tracteur (40) et correspondant à une orientation angulaire et/ou une remontée particulière de l'unité de travail (10).

Le mécanisme de blocage (2) est donc monté sur le châssis (1) pour bloquer la remontée de l'unité de travail (10) à une hauteur n'ayant aucune incidence négative sur l'inclinaison du triangle (9a) lors de la dépose de l'appareil. Le mécanisme de blocage (2) est de préférence escamotable lors de l'utilisation de la machine.

L'avantage que procure un tel mécanisme de blocage (2) est substantiel dans la mesure où ce dernier facilite les opérations d'accrochage de la machine à un système de relevage d'un tracteur (40). De nombreuses opérations de réglage pénibles et coûteuses en temps peuvent ainsi être évitées.

Le dispositif décrit permet de mettre en oeuvre un procédé d'articulation de l'unité de travail (10) par rapport au châssis (1) de la machine ou de l'appareil. Ce procédé permet à la machine de s'adapter à des configurations ou dénivellations diverses de la surface de travail (sol (30)) en permettant à l'unité de travail (10) de pivoter, le cas échéant, selon un centre instantané de rotation (I). La description de ce procédé permet en outre d'illustrer le fonctionnement et le comportement de l'appareil ou de la machine conforme à l'invention. Le procédé d'articulation consiste notamment à déplacer l'unité de travail (10) sur une surface de travail (30) dans une direction d'avance (A) et à permettre, à l'aide d'un mouvement de flottement, une remontée ou un abaissement complémentaire de l'unité de travail (10) par rapport à la position normale de travail tout en maintenant constante l'orientation angulaire de ladite unité (10) par rapport au châssis (1) lors d'un abaissement complémentaire. Le procédé consiste ensuite à agir sur l'orientation angulaire de l'unité (10), à partir d'une amplitude de remontée déterminée, en pivotant autour d'un axe réel ou virtuel transversal à la direction d'avancement (A) de la machine, ledit pivotement permettant d'aborder de façon optimale des obstacles. L'unité de travail (10) ne subit une modification de son orientation angulaire par rapport à l'horizontale ou par rapport au châssis (1) qu'à partir d'une amplitude donnée de son rapprochement du châssis (1). Cette modification correspond à l'apparition d'un centre instantané de rotation (I) et d'un mouvement de basculement ou de pivotement vers le haut de l'unité de travail (10), se déplaçant sur le sol (30). La localisation du centre instantané de rotation (I) est déterminée par la structure du dispositif d'accrochage (20) et permet de soumettre l'unité (10) à des forces aptes à faire basculer légèrement l'unité de travail (10).

Le fonctionnement et surtout les avantages de l'appareil conforme à l'invention apparaît immédiatement dans la mesure où l'adaptation à des dénivellations est automatique. En effet, l'unité de travail (10) bascule vers le haut par exemple à l'aide d'une rotation autour d'un axe fictif passant par le centre instantané de rotation (I), à la rencontre d'un obstacle significatif ou susceptible d'endommager l'appareil. Lorsque le point le plus haut de l'obstacle est dépassé, l'unité de travail (10) redescend vers sa position normale de travail et l'orientation angulaire de l'unité de travail (10) reprend sa valeur initiale correspondant à ladite position de travail normale. Un abaissement de l'unité de travail (10) allant au-delà de l'amplitude limite, définie pour la remontée, n'aura plus aucune incidence sur l'orientation angulaire de l'unité de travail (10). Ceci se traduit alors par l'absence de centre instantané de rotation (I).

La figure 1 représente à titre d'exemple une faucheuse frontale dont les outils de coupe définissent un plan de travail situé au-dessus du sol (30) à une distance (a), correspondant par exemple à 30 mm.

La figure 3 représente une remontée complémentaire de l'unité de travail (10) d'une amplitude nécessaire pour faire basculer les outils de coupe ou les disques (17) vers le haut, grâce à l'apparition du centre instantané de rotation (I).

Cette amplitude de remontée de l'unité de travail (10) correspond à l'écartement (b) par rapport au sol (30) et dépend de la construction de la machine ou plus précisément du dispositif d'accrochage (20) et éventuellement de la position de la butée (4), lorsque cette dernière est réglable.

Le dispositif d'accrochage (20) permet ainsi d'obtenir un comportement différentié de l'unité de travail (10), dépendant de la nature ou du type de dénivellation rencontrée, en réduisant les risques de détérioration, ce qui est particulièrement intéressant.

Sans sortir du cadre de la présente invention le procédé conforme à l'invention trouve son application dans d'autres types de machines agricoles tractées, ou frontales par exemple du type broyeur. L'unité de travail (10) peut également être prévue pour travailler le sol. Les faucheuses traînées sont par exemple concernées pour l'application de la présente invention.

## Revendications

1. Procédé d'articulation d'une unité de travail (10), par rapport à une structure porteuse ou châssis (1), notamment pour une machine agricole, consistant à :
- disposer l'unité de travail (10) dans une position normale de travail ;
- déplacer l'unité de travail (10) sur une surface de travail ;
- déplacer le cas échéant l'unité de travail (10) entre une positon basse de travail et une position haute de travail, ladite positon basse de travail et ladite position haute de travail étant définies par rapport à ladite position normale de travail,
- maintenir constante l'orientation angulaire de l'unité de travail (10) par rapport au châssis (1) lorsque ladite unité de travail (10) est située entre ladite positon basse de travail et ladite position normale de travail ;
***caractérisé en ce* qu'**il consiste à :
- agir sur l'orientation angulaire de ladite unité de travail (10) lorsque cette dernière est située entre une amplitude de remontée, laquelle est déterminée par rapport à ladite position normale de travail, et ladite position haute de travail, en pivotant ladite unité de travail (10) autour d'un axe réel ou virtuel, transversal à la direction d'avancement, ledit pivotement permettant d'aborder de façon optimale des obstacles rencontrés sur les surfaces de travail, et
- maintenir constante l'orientation angulaire de l'unité de travail (10) par rapport au châssis (1) lorsque ladite unité de travail (10) est située entre ladite position normale de travail et ladite amplitude de remontée déterminée.

2. Procédé selon la revendication 1, ***caractérisé en ce* qu'**il consiste :
- à basculer vers le haut, l'avant de l'unité de travail (10) à la rencontre d'un obstacle pour passer sur ledit obstacle.

3. Procédé selon la revendication 1 ou 2, ***caractérisé en ce* qu'**il consiste :
- à faire apparaître un centre instantané de rotation (I) de l'unité de travail (10) en fonction de la nature des dénivellations rencontrées.

4. Procédé selon la revendication 3, ***caractérisé en ce* qu'**il consiste :
- à localiser le centre instantané de rotation (I) de manière à appliquer un moment de forces apte à faire basculer légèrement l'unité de travail (10).

5. Appareil ou machine susceptible d'être déplacé(e) sur une surface de travail (30) comportant :
- une structure porteuse ou châssis (1),
- une unité de travail (10) articulée par rapport à ladite structure porteuse ou châssis (1), à l'aide d'un dispositif d'accrochage (20), lequel comprend au moins une liaison par parallélogramme transformable automatiquement en liaison par quadrilatère quelconque, ***caractérisé(e) en ce que*** ledit dispositif d'accrochage (20) comporte des moyens pour transformer ladite liaison par parallélogramme en liaison par quadrilatère quelconque, lesdits moyens agissant lorsque ladite unité de travail (10) est située entre une amplitude de remontée déterminée, laquelle est définie par rapport à une position normale de travail, et une position haute de travail, et lesdits moyens n'agissant pas lorsque ladite unité de travail (10) est située entre une position basse de travail et ladite amplitude de remontée déterminée.

6. Appareil ou machine selon la revendication 5, ***caractérisé(e) en ce*** que le dispositif d'accrochage (20) comporte des moyens mécaniques assurant un mouvement de flottement de l'unité de travail (10) par rapport au châssis (1) et par conséquent un mouvement de remontée ou d'abaissement complémentaire de l'unité (10) en partant de ladite position normale de travail.

7. Appareil ou machine selon la revendication 5 ou 6, ***caractérisé(e) en ce*** que le dispositif d'accrochage (20) comporte au moins un système de bielles (21, 22) pour assurer la liaison entre le châssis (1) et l'unité de travail (10).

8. Appareil ou machine selon la revendication 7, ***caractérisé(e) en ce*** que le système de bielles (21, 22) est associé à une pièce support (3) rapportée sur le châssis (1), l'une des bielles (21, 22) étant articulée sur l'unité de travail (10) avec sa première extrémité (22a), sa seconde extrémité (22b) étant articulée sur la pièce support (3) au moyen d'une articulation (25) d'axe (6).

9. Appareil ou machine selon la revendication 8, ***caractérisé(e) en ce*** que la pièce support (3) est articulée sur le châssis (1) selon un axe (5), décalé par rapport à l'axe d'articulation (6) de la bielle (21, 22) sur la pièce support (3), de sorte que cette dernière forme une bielle supplémentaire.

10. Appareil ou machine selon la revendication 9, ***caractérisé(e) en ce*** que la pièce support (3) est pourvue d'une butée (4) contre laquelle la bielle (21, 22), qui est articulée à ladite pièce support (3), est susceptible de venir en appui pour entraîner ladite pièce support (3) en rotation selon l'axe (5) et former ainsi une bielle fictive (122).

11. Appareil ou machine selon l'une quelconque des revendications 8 à 10, ***caractérisé(e) en ce*** que le système de bielles (21, 22) comprend une bielle inférieure (21) reliant directement l'unité de travail (10) au châssis (1) et une bielle supérieure (22) reliant l'unité de travail (10) à la pièce support (3).

12. Appareil ou machine selon l'une quelconque des revendications 5 à 11, ***caractérisé(e) en ce*** que le dispositif d'accrochage (20) permet de définir un centre instantané de rotation (I) pour l'unité de travail (10), et ce à partir de ladite amplitude de remontée déterminée.

13. Appareil ou machine selon l'une quelconque des revendications 5 à 12, ***caractérisé(e) en ce*** que le dispositif d'accrochage (20) comporte un système de positionnement, du type vérin hydraulique (13), pour déplacer l'unité de travail (10) entre ladite position basse de travail et une position haute de transport, et inversement.

14. Appareil ou machine selon la revendication 13, ***caractérisé(e) en ce*** que le système de positionnement est articulé sur l'unité de travail (10) et présente un point d'ancrage (13a) sur le châssis (1) coulissant dans une fente de débattement (8) ménagée dans ledit châssis (1), de manière à autoriser le mouvement de flottement de l'unité de travail (10) lorsque cette dernière est dans une position de travail.

15. Appareil ou machine selon l'une quelconque des revendications 5 à 14, ***caractérisé(e) en ce*** que le dispositif d'accrochage (20) comporte un moyen élastiquement déformable lié respectivement à des points d'ancrage (7a, 7b) du châssis (1) et de l'unité de travail (10), pour réduire les forces de réaction lorsque ladite unité (10) repose sur la surface de travail (30).

16. Appareil ou machine selon l'une quelconque des revendications 7 à 11, ***caractérisé(e) en ce*** qu'il (elle) comporte un système de bielles (21, 22) sur ses côtés latéraux.

17. Appareil ou machine selon l'une des revendications 5 à 16, ***caractérisé(e) en ce*** qu'il (elle) comprend un mécanisme de blocage (2) pour déposer ladite machine après son utilisation dans une position facilitant un futur attelage ou accrochage à un tracteur (40), et correspondant à une orientation angulaire et/ou une remontée particulière de l'unité de travail (10).

18. Appareil ou machine selon la revendication 7, ***caractérisé(e) en ce*** que l'une des bielles (21, 22) est réalisée avec une pièce de longueur variable du type vérin hydraulique.

19. Appareil ou machine selon la revendication 15, ***caractérisé(e) en ce*** que le point d'ancrage (7b) est localisé sur l'unité de travail (10) de façon à exercer un couple de forces sur ladite unité (10), tendant à ramener la configuration de la liaison par quadrilatère quelconque en liaison par parallélogramme.

20. Appareil ou machine selon l'une quelconque des revendications 5 à 19, ***caractérisé(e) en ce*** qu'il (elle) constitue une faucheuse avec ou sans moyens de traitement du produit coupé.

## Patentansprüche

1. Verfahren zur Anlenkung einer Arbeitseinheit (10) bezüglich einem Traggestell oder eines Rahmens (1), insbesondere für eine landwirtschaftliche Maschine, bei dem man
- die Arbeitseinheit (10) in eine normale Arbeitsstellung anordnet;
- die Arbeitseinheit (10) über eine Arbeitsfläche bewegt;
- die Arbeitseinheit (10) gegebenenfalls zwischen einer unteren Arbeitsstellung und einer oberen Arbeitsstellung bewegt, wobei die untere Arbeitsstellung und die obere Arbeitsstellung bezüglich der normalen Arbeitsstellung definiert sind,
- die Winkelausrichtung der Arbeitseinheit (10) bezüglich des Rahmens ( 1 ) konstant hält, wenn sich die Arbeitseinheit (10) zwischen der unteren Arbeitsstellung und der normalen Arbeitsstellung befindet;
***dadurch gekennzeichnet,* dass** man
- auf die Winkelausrichtung der Arbeitseinheit (10) einwirkt, wenn sich diese Letztere zwischen einem Aufwärtsbewegungsausmaß, das bezüglich der normalen Arbeitsstellung bestimmt wird, und der oberen Arbeitsstellung befindet, indem die Arbeitseinheit (10) um eine wirkliche oder virtuelle Achse, die quer zur Fahrtrichtung verläuft, geschwenkt wird, wobei das Schwenken es gestattet, auf den Arbeitsflächen angetroffene Hindernisse auf optimale Weise zu bewältigen, und
- die Winkelausrichtung der Arbeitseinheit (10) bezüglich des Rahmens (1) konstant hält, wenn sich die Arbeitseinheit (10) zwischen der normalen Arbeitsstellung und dem bestimmten Aufwärtsbewegungsausmaß befindet.

2. Verfahren nach Anspruch 1, ***dadurch gekennzeichnet,* dass** man
- den vorderen Teil der Arbeitseinheit (10) bei Auftreffen auf ein Hindernis nach oben kippt, um sich über das Hindernis hinweg zu bewegen.

3. Verfahren nach Anspruch 1 oder 2, ***dadurch gekennzeichnet,* dass** man
- ein momentanes Drehzentrum (I) der Arbeitseinheit (10) in Abhängigkeit von der Beschaffenheit der angetroffenen Unebenheiten erscheinen lässt.

4. Verfahren nach Anspruch 3, ***dadurch gekennzeichnet,* dass** man
- das momentane Drehzentrum (I) so positioniert, dass ein Kraftmoment angelegt wird, das die Arbeitseinheit (10) leicht kippen kann.

5. Gerät oder Maschine, das bzw. die über eine Arbeitsfläche (30) bewegt werden kann und
- ein Traggestell oder einen Rahmen (1);
- eine Arbeitseinheit (10), die mittels einer Anhängevorrichtung (20) bezüglich dem Traggestell oder des Rahmens (1) angelenkt ist, wobei die Anhängevorrichtung (20) mindestens eine Parallelogramm-Verbindung umfasst, die automatisch in eine beliebige Viereck-Verbindung umgewandelt werden kann,
aufweist, ***dadurch gekennzeichnet,* dass** die Anhängevorrichtung (20) Mittel zur Umwandlung der Parallelogramm-Verbindung in eine beliebige Viereck-Verbindung aufweist, wobei die Mittel wirken, wenn sich die Arbeitseinheit (10) zwischen einem bestimmten Aufwärtsbewegungsausmaß, das bezüglich einer normalen Arbeitsstellung definiert wird, und einer oberen Arbeitsstellung befindet, und die Mittel nicht wirken, wenn sich die Arbeitseinheit (10) zwischen einer unteren Arbeitsstellung und dem bestimmten Aufwärtsbewegungsausmaß befindet.

6. Gerät oder Maschine nach Anspruch 5, ***dadurch gekennzeichnet,* dass** die Anhängevorrichtung (20) mechanische Mittel aufweist, die eine schwimmende Bewegung der Arbeitseinheit (10) bezüglich des Rahmens (1) und folglich eine zusätzliche Aufwärts- oder Absenkbewegung der Einheit (10) von der normalen Arbeitsstellung ausgehend gewährleisten.

7. Gerät oder Maschine nach Anspruch 5 oder 6, ***dadurch gekennzeichnet,* dass** die Anhängevorrichtung (20) mindestens ein Stangensystem (21, 22) aufweist, um die Verbindung zwischen dem Rahmen (1) und der Arbeitseinheit (10) zu gewährleisten.

8. Gerät oder Maschine nach Anspruch 7, ***dadurch gekennzeichnet,* dass** das Stangensystem (21, 22) einem am Rahmen (1) angebrachten Stützteil (3) zugeordnet ist, wobei eine der Stangen (21, 22) mit ihrem ersten Ende (22a) an der Arbeitseinheit (10) angelenkt ist und wobei ihr zweites Ende (22b) mittels eines Gelenks (25) mit einer Achse (6) an dem Stützteil (3) angelenkt ist.

9. Gerät oder Maschine nach Anspruch 8, ***dadurch gekennzeichnet,* dass** das Stützteil (3) entlang einer bezüglich der Achse (6) zur Anlenkung der Stange (21, 22) an dem Stützteil (3) versetzten Achse (5) an dem Rahmen (1) angelenkt ist, so dass das Stützteil (3) eine zusätzliche Stange bildet.

10. Gerät oder Maschine nach Anspruch 9, ***dadurch gekennzeichnet,* dass** das Stützteil (3) mit einem Anschlag (4) versehen ist, an dem die an dem Stützteil (3) angelenkte Stange (21, 22) zur Anlage kommen kann, um das Stützteil (3) entlang der Achse (5) in Drehung zu versetzen und somit eine virtuelle Stange (122) zu bilden.

11. Gerät oder Maschine nach irgend einem der Ansprüche 8 bis 10, ***dadurch gekennzeichnet,* dass** das Stangensystem (21, 22) eine untere Stange (21), die die Arbeitseinheit (10) direkt mit dem Rahmen (1) verbindet, und eine obere Stange (22), die die Arbeitseinheit (10) mit dem Stützteil (3) verbindet, umfasst.

12. Gerät oder Maschine nach irgend einem der Ansprüche 5 bis 11, ***dadurch gekennzeichnet,* dass** die Anhängevorrichtung (20) es gestattet, ein momentanes Drehzentrum (I) für die Arbeitseinheit (10) zu definieren, und zwar ab dem bestimmten Aufwärtsbewegungsausmaß.

13. Gerät oder Maschine nach irgend einem der Ansprüche 5 bis 12, ***dadurch gekennzeichnet,* dass** die Anhängevorrichtung (20) ein Positioniersystem der Art Hydraulikzylinder (13) aufweist, um die Arbeitseinheit (10) zwischen der unteren Arbeitsstellung und einer oberen Transportstellung, und umgekehrt, zu bewegen.

14. Gerät oder Maschine nach Anspruch 13, ***dadurch gekennzeichnet,* dass** das Positioniersystem an der Arbeitseinheit (10) angelenkt ist und einen Verankerungspunkt (13a) am Rahmen (1) aufweist, der in einem im Rahmen (1) ausgebildeten Verschiebungsschlitz (8) gleitet, um die schwimmende Bewegung der Arbeitseinheit (10) zu gestatten, wenn sich diese Letztere in einer Arbeitsstellung befindet.

15. Gerät oder Maschine nach irgend einem der Ansprüche 5 bis 14, ***dadurch gekennzeichnet,* dass** die Anhängevorrichtung (20) ein elastisch verformbares Mittel aufweist, das mit Verankerungspunkten (7a, 7b) des Rahmens (1) bzw. der Arbeitseinheit (10) verbunden ist, um die Reaktionskräfte zu verringern, wenn die Einheit (10) auf der Arbeitsfläche (30) aufliegt.

16. Gerät oder Maschine nach irgend einem der Ansprüche 7 bis 11, ***dadurch gekennzeichnet,* dass** es (sie) an seinen (ihren) lateralen Seiten ein Stangensystem (21, 22) aufweist.

17. Gerät oder Maschine nach irgend einem der Ansprüche 5 bis 16, ***dadurch gekennzeichnet,* dass** es (sie) einen Verriegelungsmechanismus (2) aufweist, um die Maschine nach ihrer Verwendung in eine Position abzusetzen, die ein zukünftiges Ankuppeln oder Anhängen an einem Schlepper (40) erleichtert und einer Winkelausrichtung und/oder einer besonderen Aufwärtsbewegung der Arbeitseinheit (10) entspricht.

18. Gerät oder Maschine nach Anspruch 7, ***dadurch gekennzeichnet,* dass** eine der Stangen (21, 22) mit einem Teil mit variabler Länge der Hydraulikzylinderart ausgeführt ist.

19. Gerät oder Maschine nach Anspruch 15, ***dadurch gekennzeichnet,* dass** sich der Verankerungspunkt (7b) an der Arbeitseinheit (10) befindet, um an die Einheit (10) ein Kräftepaar anzulegen, das dahingehend wirkt, die Konfiguration der beliebigen Viereck-Verbindung in eine Parallelogramm-Verbindung zurückzuführen.

20. Gerät oder Maschine nach irgend einem der Ansprüche 5 bis 19, ***dadurch gekennzeichnet,* dass** es (sie) eine Mähmaschine mit oder ohne Mittel zur Bearbeitung des Schnittguts darstellt.

## Claims

1. Method of articulating a working unit (10) with respect to a carrying structure or chassis (1), especially for an agricultural machine, consisting in:
- placing the working unit (10) in a normal work position;
- moving the working unit (10) over a work surface;
- if necessary moving the working unit (10) between a low work position and a high work position, the said low work position and the said high work position being defined with respect to the normal work position,
- keeping the angular orientation of the working unit (10) constant with respect to the chassis (1) when the said working unit (10) is situated between the said low work position and the said normal work position;
***characterized in* that** it consists in:
- acting on the angular orientation of the said working unit (10) when the latter is situated between a raising amplitude, which is determined with respect to the said normal work position, and the said high work position by pivoting the said working unit (10) about a real or virtual axis, transversal to the direction of forward travel, the said pivoting allowing obstacles encountered on the work surfaces to be overcome in an optimum way, and
- keeping the angular orientation of the working unit (10) constant with respect to the chassis (1) when the said working unit (10) is situated between the said normal work position and the said determined raising amplitude.

2. Method according to Claim 1, ***characterized in* that** it consists:
- in tilting the front of the working unit (10) upwards when an obstacle is encountered in order to pass over the said obstacle.

3. Method according to Claim 1 or 2, ***characterized in* that** it consists:
- in causing an instantaneous centre of rotation (I) of the working unit (10) to appear, as a function of the nature of the unevennesses encountered.

4. Method according to Claim 3, ***characterized in* that** it consists:
- in locating the instantaneous centre of rotation (I) in such a way as to apply a moment of forces capable of making the working unit (10) tilt slightly.

5. Implement or machine which can be moved over a work surface (30), comprising:
- a carrying structure or chassis (1),
- a working unit (10) articulated with respect to the said carrying structure or chassis (1), with the aid of a connecting device (20) which comprises at least one parallelogram connection which can be automatically converted into any quadrilateral connection,
***characterized in* that** the said connecting device (20) comprises means for converting the said parallelogram connection into any quadrilateral connection, the said means acting when the said working unit (10) is situated between a determined raising amplitude, which is defined with respect to a normal work position, and a high work position, and the said means not acting when the said working unit (10) is situated between a low work position and the said determined raising amplitude.

6. Implement or machine according to Claim 5, ***characterized in* that** the connecting device (20) comprises mechanical means ensuring a fluttering movement of the working unit (10) with respect to the chassis (1) and therefore an additional raising or lowering movement of the unit (10) starting from the said normal work position.

7. Implement or machine according to Claim 5 or 6, ***characterized in* that** the connecting device (20) comprises at least one system of rods (21, 22) for providing the connection between the chassis (1) and the working unit (10).

8. Implement or machine according to Claim 7, ***characterized in* that** the system of rods (21, 22) is associated with a support piece (3) attached to the chassis (1), one of the rods (21, 22) being articulated to the working unit (10) with its first end (22a), its second end (22b) being articulated to the support piece (3) by means of an articulation (25) of axis (6).

9. Implement or machine according to Claim 8, ***characterized in* that** the support piece (3) is articulated to the chassis (1) about an axis (5) which is offset with respect to the axis (6) of articulation of the rod (21, 22) to the support piece (3), so that the latter forms an additional rod.

10. Implement or machine according to Claim 9, ***characterized in* that** the support piece (3) is fitted with a stop (4) against which the rod (21, 22) which is articulated to the said piece (3) can come to rest in order to rotate the said support piece (3) about the axis (5) and thus form an imaginary rod (122).

11. Implement or machine according to any one of Claims 8 to 10, ***characterized in* that** the system of rods (21, 22) comprises a lower rod (21) directly connecting the working unit (10) to the chassis (1), and an upper rod (22) connecting the working unit (10) to the support piece (3).

12. Implement or machine according to any one of Claims 5 to 11, ***characterized in* that** the connecting device (20) makes it possible to define an instantaneous centre of rotation (I) for the working unit (10), and to do so starting from the said determined raising amplitude.

13. Implement or machine according to any one of Claims 5 to 12, ***characterized in* that** the connecting device (20) comprises a positioning system, of the hydraulic ram (13) type, for moving the working unit (10) between the said low work position and a high transport position, and vice versa.

14. Implement or machine according to Claim 13, ***characterized in* that** the positioning system is articulated to the working unit (10) and has an anchoring point (13a) on the chassis (1) sliding in a travel slot (8) formed in the said chassis (1) so as to allow a fluttering movement of the working unit (10) when this unit is in a work position.

15. Implement or machine according to any one of Claims 5 to 14, ***characterized in* that** the connecting device (20) comprises an elastically deformable means connected respectively to anchoring points (7a, 7b) on the chassis (1) and on the working unit (10) in order to reduce the reaction forces when the said unit (10) is resting on the work surface (30).

16. Implement or machine according to any one of Claims 7 to 11, ***characterized in* that** it comprises a rod system (21, 22) on its lateral sides.

17. Implement or machine according to one of Claims 5 to 16, ***characterized in* that** it comprises a blocking mechanism (2) for setting down the said machine after it has been used in a position which makes future hitching or connecting to a tractor (40) easier, and which corresponds to an angular orientation and/or particular raising of the working unit (10).

18. Implement or machine according to Claim 7, ***characterized in* that** one of the rods (21, 22) is produced with a variable-length piece of the hydraulic ram type.

19. Implement or machine according to Claim 15, ***characterized in* that** the anchoring point (7b) is located on the working unit (10) in such a way as to exert a couple of forces on the said unit (10), tending to return the configuration of the connection from any quadrilateral to a parallelogram connection.

20. Implement or machine according to any one of Claims 5 to 19, ***characterized in* that** it constitutes a mower with or without means for treating the cut product.
